# EUROPEAN PATENT SPECIFICATION

(11) **EP 0 556 195 B1**
(45) Date of publication and mention of the grant of the patent: **03.08.1994**
(21) Application number: 91917010.0
(22) Date of filing: 25.09.1991
(51) Int. Cl.: G01N 1/04, B01L 3/02

(54) **POWDER PIPETTE AND APPARATUS FOR HANDLING SUCH A PIPETTE**
PIPETTE FÜR PULVER UND APPARAT ZUR HANDHABUNG EINER SOLCHEN PIPETTE
PIPETTE A POUDRE ET APPAREIL DE MANIPULATION D'UNE TELLE PIPETTE

(30) Priority: 08.11.1990 DK 2675/90
(43) Date of publication of application: 25.08.1993
(73) Proprietor: NOVO NORDISK A/S, 2880 Bagsvaerd (DK)
(72) Inventor: JENSEN, Erik, Thor, DK-3520 Farum (DK); HANSEN, Ib, DK-2730 Herlev (DK)
(74) Representative: Hansen, Einar Tronier
(86) International application number: DK9100288
(87) International publication number: WO9208964

(56) References cited:
- US-A- 1 205 888
- US-A- 2 914 950
- US-A- 3 080 760

## Description

The invention relates to powder pipettes comprising a downward tapering tubular part, the bottom of which is closed, and which part is split into sections along planes parallel with the length axis of the pipette, the sections being provided with means for opening and closing the pipette along its longitudinal splittings.

During the manufacturing of pulverulent products samples of the product are currently taken out to be analyzed to make sure that the intended quality of the product is maintained.

Such samples may be taken out manually by simply taking out a spoonful of the material and weighing out a precise quantity for the analysis. Using a spoon of a size holding approximately the quantity wanted makes it possible to replace the precise weighing out by a simple weighing of the quantity taken out and set the result of the analysis in relation to the quantity used.

To make sure that material is not carried over from one sample to another it is preferred to use a new spoon for each sample. As the dust of the product may be harmful to the person taking out the samples, a mechanical sampler which in isolation can take out the samples and place them in test tubes or other appropriate vessels is to be preferred. Further, a tool is preferred which in contradistinction to a spoon helps to avoid spillage of material on its way from where the sample is taken out to the test vessel.

US Patent No. 1,205,888 discloses a tool for taking samples, which tool has the shape of a pair of scissors the cutting shears of which are substituted by hollow shells which may be forced against each other along their edges to form a beak-like tapering tubular member. The beak of the tool may be closed or opened by hand pieces coupled to the shells the same way as the hand pieces of a pair of scissors are coupled to the cutters.

US Patent Specification No. 2,914,950 describes a device comprising a pair of spoon-shaped members each comprising a spoon head and a shank. The spoon heads may be brought into engagement with each other along their edges to collectively form a chamber in which a sample may be confined.

The ends of the shanks opposite the spoon heads are meeting in a point above these spoon heads, and a tubular weight surrounding the shanks may be released to move towards the spoon heads to force these heads towards each other.

A sample probe for bulk chemicals is described in US Patent Specification No. 3,080,760. This sample probe comprises a frusto-conical outer shell having apertures therein, and an inner sample holder matching rotatably into this shell. The sample holder has separate, uniform-sized sample compartments which may one at the time be placed abreast of one of the apertures in the shell when the sample holder is rotated in this shell.

The purpose of this invention is to provide a powder pipette for taking out samples of a pulverulent material, which pipette is suited for being used in an automatic sampler taking out a sample of a powdery product and placing it in a test vessel and thereafter disposing of the used pipette and taking a new one from a storage for new and unused pipettes. Such a pipette has to be simple, cheap and easy to handle, and it must ensure that the sample is representative for the product sampled, and that approximately the same quantity of material is taken out at each sampling.

This is obtained by a pipette as described in the introduction to this specification, which pipette according to the invention is characterized in that it comprises an upper tubular part integral with the split downward tapering tubular part, and that the walls of the sections are provided with through-going notches. Preferably, the lower tapering part is split into two sections along a plane through the axis of the pipette.

The closed pipette is stuck into the body of material to be sampled and is moved forwards and backwards to make material flow through the notches into the tapering interior of the tube. When the pipette is drawn out of the material and shaken, material lying above the notches flows out so that a well defined quantity of material is held by the pipette and may be transferred to a testtube or the like, where the pipette is opened to discharge its content. Thereafter the pipette is disposed of.

According to the invention the notches may be downward delimited by a horizontal plane cut to make more precise the level defined by the notches.

The horizontal edges of the notches may appropriately be sharpened so that no material can settle on these edges.

The pipette is opened and closed along the edges of the sections of the lower tapering part, and to avoid that material jamming at the end of the cuts causes leaking along the rest of the cut it is appropriate that the upper end of each axial cut splitting the lower parts is terminated by an opening in the tube wall.

According to the invention the pipette may be moulded from a plastic material, and the spring effect of the plastic material acts to keep the pipette open when not influenced. This is obtained by moulding the pipette in its open position.

The closing of the pipette is then obtained by pressing the sections of the split lower part against each other against the resiliency of the plastic material. In preparation for this the pipette comprises constructions added to each section of the split lower part, which constructions present even in the closed position of the pipette an upward tapering mainly conic surface coaxial with the pipette. These constructions are designed to cooperate with a tool on a robot arm, but may also cooperate with a manually operated tool or act as finger grips if the pipette is used manually.

The same way the upper part of the pipette may have a socket for receiving a gripping device of a robot. This socket may simply be a piece of the upper part, into which a corresponding cylindric rod on the robot fits when slightly pressed into its bore. To limit the insertion depth of the rod the socket may have an abutment at its inner side some distance away from the upper edge of the cylindric part.

According to an embodiment of the invention the pipette may also be at its upper edge provided with gripping fingers having protrusions cooperating with recesses in the gripping device of the tool.

According to the invention the pipette may comprise a tool for handling it. Such a tool comprises a gripping device for taking the pipette from a storage, an opening and closing device for closing the pipette when stuck into the material to be sampled and to open it when the material should be discharged, and an ejecting device to knock off the used pipette.

The gripping device may be a rod shaped member engaging the upper end of the pipette either by fitting narrowly into this end or by having a recess engaged by protrusions on fingers at the upper end of the pipette.

The opening and closing device may be a tube with a downward flaring bore within which tube the gripping rod may be axially displaced to bring the opening and closing means of the pipette out of and into contact with the inner surface of the downward flaring bore to make the sections of the pipette straddle away from each other and to press the sections together, respectively.

The ejecting device may be a tubular member slidingly fitting cver the gripping device and being axially displaceable along this device. When displaced in the direction toward the pipette the edge of the tubular ejecting member abuts the upper edge of the pipette mounted on the gripping device and further axial displacement of the ejecting member will knock off the pipette from the gripping device.

The tool may be designed as a manually operated tool comprising a handle firmly connected with the opening and closing device and having a push button, the movement of which will first be transmitted to the gripping device to move this device relative to the opening and closing device and thereafter to the ejecting device to move this device relative to the gripping device.

Finally, it may be appropriate to provide the tool with an active shaking device either shaking the whole tool or only the gripping device. Such an active shaking device may be of any known kind and may be built into the handle of the tool or into the gripping device.

In the following an embodiment of the invention is described with reference to the drawings, wherein
- Fig. 1: shows a side view of an open pipette according to the invention.
- Fig. 2: shows a plane view of the pipette of Fig. 1,
- Fig. 3: shows a sectional front view of the pipette of Fig. 1,
- Fig. 4: corresponds to Fig. 1 with the pipette closed,
- Fig. 5: shows a sectional view of the pipette of Fig. 1 mounted in a robot tool.
- Fig. 6: shows a front sectional view of a manually operated tool handling a pipette according to the invention,
- Fig. 7: shows a sectional side view of the tool of Fig. 6, and
- Fig. 8: shows an adapting device to provide a pipette with gripping fingers at its upper end.

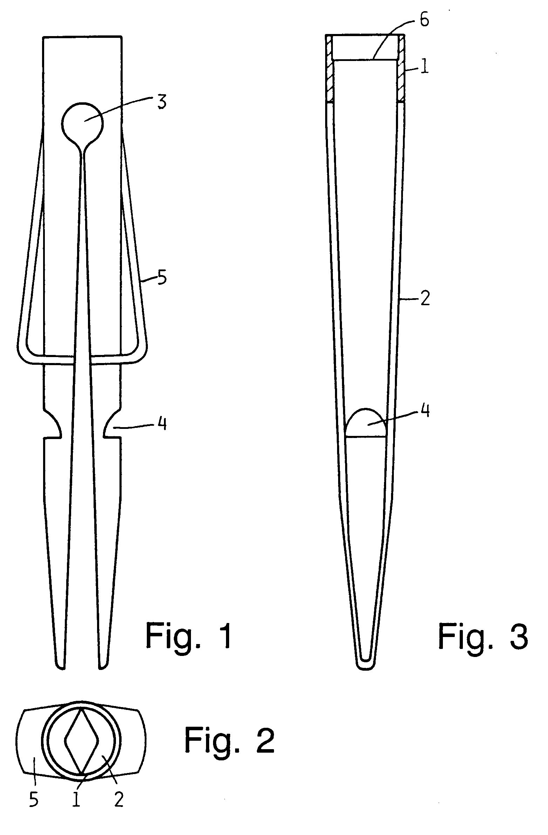

The pipette shown in Figures 1-4 comprises, as it is best seen in Fig. 3, an upper cylindric part 1 and a lower tapering part 2 increasingly tapering towards its lower closed end. The pipette is moulded from plastic material as one integral piece.

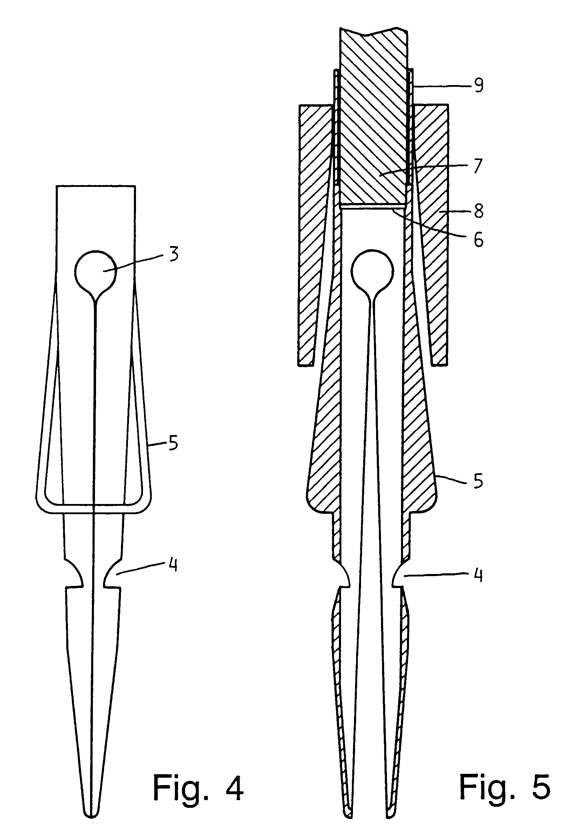

As seen in the closed position of the pipette as in Fig. 4, the lower tapering part 2 is split in two sections along a plane through the longitudinal axis of the pipette. The splitting is upwardly terminated by an opening 3 to avoid that jamming between the two sections should hamper the closing of the pipette. Further, the opening 3 defines a fulcrum when the spring effect of the plastic material is utilized as will be explained below.

The sections of the tapering part are provided with notches 4 at a chosen distance above the bottom of this part. The choice is made in accordance with the wanted (quantity of material in the sample. This way this quantity may be varied within certain limits by altering the position of the notches. Further variation of the quantity may be obtained by choosing another diameter of the tube. To obtain a well defined level of material in the pipette the notches are downward limited by a plane horizontal cut. The horizontal edges formed by this cut leave surfaces on which material may settle. Therefore, such edges should be sharpened as shown in Figure 5.

The shown pipette is moulded from a plastic material in the position shown in Fig. 1. When a sample shall be taken the straddling sections of the lower part are pressed against each other to make a tight tapering tube with a closed bottom. The pipette is stuck into the material to be sampled and is moved forwards and backwards in the direction of the notches to make the powdery material flow in through the notches to fill the tube. When lifted out of the material body excessive material flows out of the notches, and by shaking the pipette the level of material is limited to the level of the lower horizontal edge of the notches.

The pipette is now passed to the vessel intended to receive the sample and the pressure pressing the sections against each other is relieved. Now the sections will return to their straddling position, and the filling in the pipette will fall out into the receiving vessel possibly helped by snaking the pipette, which is thereafter thrown away. By being tapered the pipette may be stuck into the material body without influencing the grain distribution of the material adjacent to the pipette, and consequently a representative sample is ensured.

In preparation of pressing the straddling sections against each other these sections may be provided with constructions 5 providing a part of an upward tapering mainly conic surface coaxial with the pipette. These constructions are intended for the action of a tool, but may also act as finger grips if the pipette is used manually.

To provide a socket for a gripping device on a robot arm the bore of the upper cylindric part has at its upper end a slightly enlarged diameter. By the passage to the part of the bore having the normal diameter there is created a shoulder 6 serving as a stop for an inserted gripping tool, which may be a cylindric rod narrowly fitting into the enlarged diameter.

Fig. 5 shows the pipette mounted in a robot tool. The pipette is gripped from a storage by inserting the rod 7 in the part with the enlarged diameter. Thereafter a sleeve 8 with a conic bore is passed downwards to engage with the constructions 5 and further downwards to press the straddling sections against each other to close the pipette, which is then positioned above the material body to be sampled. The pipette is then lowered into the material body and moved to fill the pipette. Thereafter it is drawn out of the material body, shaken and then passed to the receiving vessel. The pipette is now opened by passing the sleeve 8 upwards out of engagement with the constructions 5. The pipette is shaken to make sure that the material leaves the pipette, and thereafter the pipette is passed to a position above a litter box. Now a sleeve 9 is passed downwards to knock the pipette off the rod 7, whereafter the sleeve 9 is passed back, and the robot is ready for a new cycle.

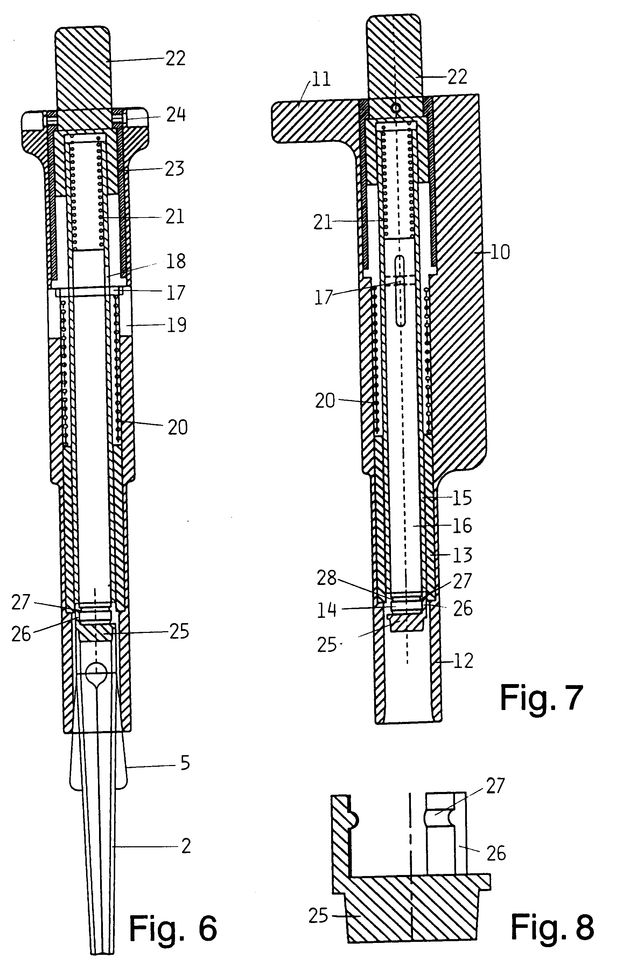

Figures 6 and 7 show a tool for manual use of the pipette. This tool comprises a housing forming a handle 10 having at its upper end a protrusion 11 designed for resting on the fingers when the handle 10 is gripped by a hand. At its lower end the handle is provided with a tubular member 12 having a bore which continues up through the handle and which contains the functional elements of the tool. At its end opposite the handle the bore is slightly flaring to engage the constructions 5 of a pipette.

The diameter of the bore varies in steps forming one shoulder inside the tubular member 12 and another inside the handle 10. Fitting into the bore a sleeve 13 rests on the shoulder in the tubular member. A rod 16, forming at its lower end a gripping device 14, is surrounded by a tubular member 15 extending from just above the gripping device 14 at one end of the rod 16 to a distance beyond the other end of the rod 16.

A helical spring 20 surrounding the rod 16 and the tubular member is held slightly compressed between an upper edge of the sleeve 13 and a pin 17 through the rod perpendicular to its axis and projecting through slots 18 in the tubular member 15 into guiding slots 19 in the walls of the handle 10. Another spring 21 inside the tubular member 15 is slightly compressed between the upper end of the rod 16 and a push button 22 mounted at the upper end of the handle by a bushing 23 secured in this handle by a pair of screws 24.

The hand tool described is designed to be used with pipettes having gripping fingers at their upper edge. Such gripping fingers may be casted integral with the pipette or they may be provided by fitting into the upper end of the pipette a gripping device as shown in figure 8.

The device mentioned simply comprises a short cylindric part 25 which may be secured to the upper end of the pipette by being press fitted, glued, or welded into this end. Along its edge the cylindric part is provided with spaced fingers 26 having at their outer ends protrusions 27 which may engage a recess 28 in the gripping device of a tool.

When the tool in figures 6 and 7 is passed down over the end of a pipette stored in vertical position with its tapered end down, the upper end of the pipette passes into the bore of the tubular member 12. When the gripping device 14 reaches the gripping fingers 26 of the pipette these fingers are pressed outwards when their protrusions 27 ride over the gripping device 14. Thereby the upper edges of the fingers 26 will abut the lower edge of the sleeve 13 and when the pipette is passed further into the tool the sleeve 13 will be lifted from the shoulder in the tubular member 12 against the force of the spring 20. When the protrusions 27 on the fingers 26 of the pipette at last snap into the annular recess 28 in the rod 16 just above the gripping device 14 the sleeve will return to its shoulder abutting position and will now surround the outer end of the fingers preventing them from being forced out of engagement with the gripping device 14. The position of the gripping device 14 relative to the outer end of the tubular member 12 is so chosen that the sections of the pipette are closed by the flared bore of the tubular member 13 engaging the constructions 5 of the pipette when the pipette is gripped in the tool as described above.

The pipette may now be filled with powder by inserting it into the material body to be sampled. The opening of the pipette when the material should be discharged is obtained by pressing the push button 22. The movement of the push button 22 is transmitted via the spring 21 to the rod 16, and by the spring 21 being much stiffer than the spring 20 the spring 21 initially will act as a rigid connection so that the movement of the button 22 is transmitted to the rod 16, which against the force of the spring 20 will be moved forward and will move the pipette out of the bore of the tubular member 12. Thereby the constructions 5 of the pipette come out of engagement with the flared opening of the tubular member 12 and the spring force of the pipette sections will move them away from each other opening the pipette.

If the button 22 is pushed further the pin 17 through the rod 16 will reach the bottom of the slots 19 in the handle and the forward movement of the rod will be stopped. Hereafter the spring 21 will be compressed and the push button will abut the end of the tubular member 15 and displace this member in relation to the rod 16. Thereby the other end of the tubular member 15 will abut the upper edges of the gripping fingers 27 and as the gripping device has been pushed forward, these fingers are no longer locked by the sleeve 13 and the movement of the tubular member 15 relative to the rod 16 will knock off the pipette.

The manually operated tool may contain a kind of an active shaking mechanism to shake off excess material. This mechanism may with its power supply be accommodated in the handle or the mechanism may be accommodated in the rod 16 and the power supply in the handle. The shaking mechanism may be provided in the form of a piezo electric device or as a mechanical device with an unbalanced rotated part.

Another way to prevent settling of excess material is to omit horizontal surfaces, e.g. by letting the walls of the pipette taper to form a sharp edge at the lover end of the notches.

The pipette is here described as straddling in its neutral position. Of course, an embodiment according to which the pipette is closed in its neutral position and has means for opening it will be within the scope of the invention, just as the pipette may be used manually instead of with a tool. Although mainly described for taking out samples of a pulverulent product, the pipette may be used in all cases where apportioned quantities of powdery material shall be provided.

## Claims

1. A pipette comprising a downward tapering tubular part (2), the bottom of which is closed and which part is split into sections along planes parallel with the length axis of the pipette, the sections being provided with means for opening and closing the pipette along its longitudinal splittings, **characterized** in, that it comprises an upper tubular part (1), integral with the split downward tapering tubular part (2), and that the walls of the sections are provided with through-going notches (4).

2. A pipette according to claim 1, **characterized** in that the lower tapering part (2) is split into two sections by a plane through the axis of the pipette.

3. A pipette according to claim 1 or 2 **characterized** in that the notches (4) are downward delimited by a horizontal plane cut.

4. A pipette according to claim 3, **characterized** in that the wall thickness of the pipette tapers to form a sharp edge at the edge delimiting the notches (4) downward.

5. A pipette according to claim 1, 2, 3 or 4, **characterized** in that the upper end of the splitting is terminated by an opening (3) in the tube wall.

6. A pipette according to any of the preceding claims, **characterized** in that the pipette is moulded from a plastic material, and that the means for opening the pipette is the spring effect of the plastic material, the pipette being moulded in its open position.

7. A pipette according to claim 6, **characterized** in that the means for closing the pipette comprises constructions (5) added to each section of the split lower part (2) and presenting even in the closed position of the pipette an upward tapering mainly conic surface coaxial with the pipette.

8. A pipette according to any of the preceding claims, **characterized** in that the upper end of an upper cylindric part (2) has a socket for receiving a gripping device.

9. A pipette according to claim 8, **characterized** in a shoulder (6) at the inner surface of the cylindric part (1) some distance away from the upper edge.

10. A pipette according to any of the preceding claims, **characterized** in that gripping fingers (26) are provided at the upper edge of the pipette tube (1).

11. A pipette according to any of the claims 1-10, **characterized** in, that it comprises a tool having a gripping device (7;14), an opening and closing device (8;12), and an ejecting device (9;15).

12. A pipette according to claim 11, **characterized** in, that the gripping device is a rod (7) engaging the upper tubular part (1).

13. A pipette according to claim 11 or 12, **characterized** in that the opening and closing device is a tube (8) with a downward flaring bore within which the gripping device (7) is axially displaceably mounted.

14. A pipette according to any of claims 11-13, **characterized** in that the ejecting device is a tubular member (9) fitting over the gripping device (7) and being axially displaceable on this device.

15. A pipette according to any of claims 11-14, **characterized** in that the tool comprises a handle (10) with a push button (22), which button is connected to the gripping device (14) and the ejecting device (15) to actuate these devices sequentially by progressive pressing.

16. A pipette according to claim 15, **characterized** in that active shaking means are comprised in the handle (10) or the gripping device (14).

## Patentansprüche

1. Eine Pipette, die einen sich nach unten verjüngenden, röhrenförmigen Teil (2) umfaßt, dessen unteres Ende geschlossen und das in Abschnitte entlang Ebenen geteilt ist, die parallel zur Längsachse der Pipette verlaufen, wobei die Abschnitte mit Mitteln zum Öffnen und Schließen der Pipette entlang ihrer Längsteilungen versehen sind, dadurch gekennzeichnet, daß sie einen oberen, röhrenförmigen Teil (1) umfaßt, der mit dem geteilten, sich nach unten verjüngenden, röhrenförmigen Teil (2) eine Einheit bildet, und daß die Wände der Abschnitte mit durchgehenden Kerben (4) versehen sind.

2. Eine Pipette nach Anspruch 1, dadurch gekennzeichnet, daß der untere, verjüngende Teil (2) in zwei Abschnitte durch eine Ebene durch die Achse der Pipette geteilt ist.

3. Eine Pipette nach Anspruch 1 oder 2, dadurch gekennzeichnet, daß die Kerben (4) nach unten durch einen horizontalen, ebenen Schnitt begrenzt sind.

4. Eine Pipette nach Anspruch 3, dadurch gekennzeichnet, daß die Wandstärke der Pipette sich verjüngt, um eine scharfe Kante an der Kante, die die Kerben (4) nach unten begrenzt, zu bilden.

5. Eine Pipette nach Anspruch 1, 2, 3 oder 4, dadurch gekennzeichnet, daß das obere Ende der Teilung durch eine Öffnung (3) in der Rohrwand abgeschlossen wird.

6. Eine Pipette nach einem der vorangehenden Ansprüche, dadurch gekennzeichnet, daß die Pipette aus einem Kunststoffmaterial ausgeformt ist und daß das Mittel zum Öffnen der Pipette die Federwirkung des Kunststoffmaterials ist, wobei die Pipette in ihrer geöffneten Stellung ausgeformt ist.

7. Eine Pipette nach Anspruch 6, dadurch gekennzeichnet, daß das Mittel zum Schließen der Pipette Konstruktionen (5) umfaßt, die jedem Abschnitt des geteilten, unteren Teils (2) hinzugefügt sind und sogar in der geschlossenen Stellung der Pipette eine sich nach oben hin verjüngende, im wesentlichen konische Oberfläche koaxial zur Pipette aufweisen.

8. Eine Pipette nach einem der vorangehenden Ansprüche, dadurch gekennzeichnet, daß das obere Ende eines oberen, zylindrischen Teils (2) eine Fassung zur Aufnahme einer Greifvorrichtung hat.

9. Eine Pipette nach Anspruch 8, gekennzeichnet durch eine Schulter (6) an der inneren Oberfläche des zylindrischen Teils (1) in geringer Entfernung von der oberen Kante.

10. Eine Pipette nach einem der vorangehenden Ansprüche, dadurch gekennzeichnet, daß Greiffinger (26) an der oberen Kante des Pipettenrohres (1) vorgesehen sind.

11. Eine Pipette nach einem der Ansprüche 1 bis 10, dadurch gekennzeichnet, daß die Pipette ein Instrument umfaßt, das eine Greifvorrichtung (7; 14), eine Öffnungs- und Schließvorrichtung (8; 12) und eine Auswerfvorrichtung (9; 15) umfaßt.

12. Eine Pipette nach Anspruch 11, dadurch gekennzeichnet, daß die Greifvorrichtung ein Stab (7) ist, der in den oberen, röhrenförmigen Teil (1) faßt.

13. Eine Pipette nach Anspruch 11 oder 12, dadurch gekennzeichnet, daß die Öffnungs- und Schließvorrichtung ein Rohr (8) mit einer sich nach unten verjüngenden Bohrung ist, in der die Greifvorrichtung (7) axial verschiebbar angebracht ist.

14. Eine Pipette nach einem der Ansprüche 11 bis 13, dadurch gekennzeichnet, daß die Auswerfvorrichtung ein röhrenförmiges Teil (9) ist, das über die Greifvorrichtung (7) paßt und auf dieser Vorrichtung axial verschiebbar ist.

15. Eine Pipette nach einem der Ansprüche 11 bis 14, dadurch gekennzeichnet, daß das Instrument einen Griff (10) mit einem Druckknopf (22) umfaßt, der mit der Greifvorrichtung (14) und der Auswerfvorrichtung (15) verbunden ist, um diese Vorrichtungen nacheinander durch stufenweises Drücken auszulösen.

16. Eine Pipette nach Anspruch 15, dadurch gekennzeichnet, daß aktive Schüttelvorrichtungen in dem Griff (10) oder der Greifvorrichtung (14) vorgesehen sind.

## Revendications

1. Pipette comprenant une partie tubulaire allant en s'amenuisant vers le bas (2) dont le fond est fermé, laquelle partie tubulaire est divisée en sections le long de plans parallèles à l'axe longitudinal de la pipette, les sections étant dotées de moyens pour ouvrir et fermer la pipette sur ses divisions longitudinales, caractérisée en ce qu'elle comprend une partie tubulaire supérieure (1), solidaire de la partie tubulaire divisée allant en s'amenuisant vers le bas (2) et en ce que les parois des sections sont dotées d'encoches de bout en bout (4).

2. Pipette selon la revendication 1, caractérisée en ce que la partie inférieure allant en s'amenuisant (2) est divisée en deux sections par un plan à travers l'axe de la pipette.

3. Pipette selon la revendication 1 ou 2, caractérisée en ce que les encoches (4) sont délimitées vers le bas par une coupe en plan horizontal.

4. Pipette selon la revendication 3, caractérisée en ce que l'épaisseur de paroi de la pipette va en s'amenuisant pour former un bord tranchant sur le bord délimitant les encoches (4) vers le bas.

5. Pipette selon la revendication 1, 2, 3 ou 4, caractérisée en ce que l'extrémité supérieure de la division se termine par une ouverture (3) dans la paroi du tube.

6. Pipette selon l'une quelconque des revendications précédentes, caractérisée en ce que la pipette est moulée à partir d'un matériau plastique et en ce que les moyens destinés à ouvrir la pipette se font sous l'effet ressort du matériau plastique, la pipette étant moulée dans sa position ouverte.

7. Pipette selon la revendication 6, caractérisée en ce que les moyens pour ouvrir la pipette comprennent des éléments (5) ajoutés à chaque section de la partie inférieure divisée (2) et présentant même dans la position fermée de la pipette une surface principalement conique allant en s'amenuisant vers le haut, coaxiale avec la pipette.

8. Pipette selon l'une quelconque des revendications précédentes, caractérisée en ce que l'extrémité supérieure de la partie cylindrique supérieure (2) présente une douille destinée à recevoir un dispositif de préhension.

9. Pipette selon la revendication 8, caractérisée en ce qu'un épaulement (6) au niveau de la surface intérieure de la partie cylindrique (1) se trouve à une certaine distance du bord supérieur.

10. Pipette selon l'une quelconque des revendications précédentes, caractérisée en ce que des doigts de préhension (26) sont prévus sur le bord supérieur du tube de pipette (1).

11. Pipette selon l'une quelconque des revendications 1-10, caractérisée en ce qu'elle comprend un outil comportant un dispositif de préhension (7;14), un dispositif d'ouverture et de fermeture (8;12) et un dispositif d'éjection (9;15).

12. Pipette selon la revendication 11, caractérisée en ce que le dispositif de préhension est une tige (7) s'engageant dans la partie tubulaire supérieure (1).

13. Pipette selon la revendication 11 ou 12, caractérisée en ce que le dispositif d'ouverture et de fermeture est un tube (8) avec un alésage allant en s'évasant vers le bas à l'intérieur duquel le dispositif de préhension (7) est monté de façon axialement déplaçable.

14. Pipette selon l'une quelconque des revendications 11-13, caractérisée en ce que le dispositif d'éjection est un élément tubulaire (9) s'adaptant sur le dispositif de préhension (7) et étant déplaçable axialement sur ce dispositif.

15. Pipette selon l'une quelconque des revendications 11-14, caractérisée en ce que l'outil comprend une poignée (10) avec un bouton-poussoir (22), lequel bouton est raccordé au dispositif de préhension (14) et le dispositif d'éjection (15) pour actionner ces dispositifs séquentiellement par compression progressive.

16. Pipette selon la revendication 15, caractérisée en ce que des moyens actifs d'agitation sont compris dans la poignée (10) ou dans le dispositif de préhension (14).
